# EUROPEAN PATENT APPLICATION

(11) **EP 4 613 598 A1**
(43) Date of publication of application: **10.09.2025**
(21) Application number: 22964861.3
(22) Date of filing: 11.11.2022
(51) Int. Cl.: B60W 60/00, B60R 16/023, G06F 21/60, G05D 1/00

(54) **CONTROL METHOD, APPARATUS, VEHICLE, ELECTRONIC DEVICE AND STORAGE MEDIUM**

(71) Applicant: Shenzhen Yinwang Intelligent Technologies Co., Ltd., Shenzhen, Guangdong 518129 (CN)
(72) Inventor: CHENG, Baochuan, Shenzhen, Guangdong 518129 (CN); LIU, Lu, Shenzhen, Guangdong 518129 (CN); WANG, Jianwei, Shenzhen, Guangdong 518129 (CN); LI, Lei, Shenzhen, Guangdong 518129 (CN); PANG, Cong, Shenzhen, Guangdong 518129 (CN)
(74) Representative: Pfenning, Meinig & Partner mbB
(86) International application number: PCT/CN2022/131453
(87) International publication number: WO 2024/098393

(57) **Abstract**

A control method and apparatus, a vehicle (10), an electronic device, and a storage medium are provided. The control method includes: obtaining control information, where the control information indicates to turn on or turn off all sensing devices (101) in a first range of the vehicle (10); and controlling, based on the control information, all the sensing devices (101) in the first range to be turned on or off.

## Description

### TECHNICAL FIELD

This application relates to the field of intelligent driving technologies, and in particular, to a control method and apparatus, a vehicle, an electronic device, and a storage medium.

### BACKGROUND

For a vehicle with an autonomous driving capability, a plurality of sensors are usually installed inside and outside the vehicle, for example, one or more of a camera (camera), a lidar (light detection and ranging, lidar), a millimeter-wave radar (radio detection and ranging, radar), an ultrasonic sensor (ultrasonic sensor, USS), an inertial navigation system (inertial navigation system, INS), or a global positioning system (global positioning system, GPS). Data collected by these sensors may relate to privacy (for example, a picture collected by the camera) of persons inside and outside the vehicle or may interfere with an ambient environment (for example, laser emitted by the lidar interferes with a data collection environment of an observatory). Therefore, a working status of these sensors needs to be controlled.

### SUMMARY

This application provides a control method, a vehicle, an apparatus, an electronic device, a computer-readable storage medium, and a computer program product, to control a working status of a vehicle sensor.

According to a first aspect, this application provides a control method. The method is applied to a vehicle, and includes: obtaining control information, where the control information indicates to turn on or off all sensing devices in a first range of the vehicle; and controlling, based on the control information, all the sensing devices in the first range to be turned on or turned off.

According to the foregoing technical solution, all the sensing devices in the first range may be controlled to be turned on or turned off based on the control information, so that a working status of all the sensing devices in the first range can be conveniently and quickly switched. When all the sensing devices in the first range are turned off, functions (for example, functions such as human driving and in-cockpit entertainment) of other devices are not affected, so that it is ensured that traveling safety is not affected when all the sensing devices in the first range are turned off. In addition, because the data collected by the sensing device may relate to personal privacy of a driver and a person outside the vehicle, or may interfere with an ambient environment of the vehicle, when all the sensing devices in the first range are turned off, privacy protection may be provided for the driver and the person outside the vehicle, and the ambient environment of the vehicle may be protected from interference from the sensing devices, to meet a requirement of the driver or a related regulation.

In a possible implementation of the first aspect, when the vehicle is in an autonomous driving mode, the method further includes: before controlling all the sensing devices in the first range to be turned off, controlling the vehicle to exit the autonomous driving mode.

According to the foregoing technical solution, because the vehicle in the autonomous driving mode usually needs the sensing device to be in a turn-on state, traveling safety of the autonomous vehicle is affected when the sensing device is turned off. Therefore, before all the sensing devices in the first range are controlled to be turned off, the vehicle may be controlled to exit the autonomous driving mode, for example, the vehicle may be switched to a human driving mode, to ensure traveling safety.

In a possible implementation of the first aspect, the sensing device in the first range includes at least one of a sensing device controlled by a cockpit domain controller CDC, a sensing device controlled by an intelligent driving domain controller ADC, and an in-vehicle wireless gateway.

In an example, controlling all the sensing devices controlled by the cockpit domain controller to be turned off may be turning off sensing devices such as an in-vehicle camera, so that privacy of a driver is protected. Controlling all the sensing devices controlled by the intelligent driving domain controller to be turned off may be turning off sensing devices such as an out-vehicle camera, a lidar, a millimeter-wave radar, an ultrasonic sensor, and an inertial navigation system, so that privacy of a person outside the vehicle can be protected, and an ambient environment of the vehicle can be protected from interference from the sensing devices. Controlling the in-vehicle wireless gateway to be turned off may be disconnecting the vehicle from an external wireless network.

In a possible implementation of the first aspect, when the sensing device in the first range is the sensing device controlled by the ADC, and all the sensing devices are turned off, the method further includes: controlling the ADC to enter a sleep state.

According to the foregoing technical solution, the intelligent driving domain controller is configured to control the vehicle to perform autonomous driving. The vehicle usually exits the autonomous driving mode when all the sensing devices controlled by the intelligent driving domain controller are turned off. In this case, the intelligent driving domain controller may be controlled to enter the sleep state, to save energy of the vehicle.

In a possible implementation of the first aspect, the obtaining control information includes: obtaining the control information generated by the vehicle in response to a first operation of a driver.

According to the foregoing technical solution, all the sensing devices in the first range may be controlled to be turned on or turned off based on the operation of the driver, so that the driver switches a working status of all the sensing devices in the first range in one-click mode. This is more convenient and quicker.

In a possible implementation of the first aspect, the control information includes vehicle-to-everything V2X information; and the obtaining control information includes: receiving the V2X information from a roadside device, where the roadside device is located at an edge of a specified area, and the specified area is an area in which environment information is not allowed to be collected.

According to the foregoing technical solution, all the sensing devices in the first range may be automatically controlled to be turned off based on the V2X information from the roadside device, so that working status of all the sensing devices in the first range can be conveniently switched.

In a possible implementation of the first aspect, the obtaining control information includes: obtaining a first planned path of the vehicle, and generating a second planned path when the first planned path passes through a specified area, where the second planned path does not pass through the specified area, and the specified area is an area in which environment information is not allowed to be collected; sending prompt information, where the prompt information is used to prompt a driver to update the first planned path to the second planned path; and triggering the control information when the driver does not update the first planned path to the second planned path.

According to the foregoing technical solution, based on the specified area in which the environment information is not allowed to be collected (that is, the specified area), when it is predicted that the planned path of the vehicle passes through the area in which the environment information is not allowed to be collected, the route is re-planned in advance, and the driver is automatically prompted whether to select a new route. If the driver selects the new route, the area may be avoided. When the driver does not select the new route, the sensing devices may be automatically switched to a state in which all sensing devices are turned off, so that violation can be avoided. In an example, when the driver does not select the new route, autonomous driving degradation may be automatically triggered, to ensure traveling safety.

In a possible implementation of the first aspect, the specified area includes: an area determined based on a selection operation of the driver in a map or an area selection list, where the area selection list includes one or more areas; or an area determined based on the first planned path and a specified area selection rule.

According to the foregoing technical solution, the specified area may be set based on an input of the driver, or the specified area may be automatically determined based on the first planned path and the specified area selection rule, so that the specified area can be flexibly determined.

According to a second aspect, this application provides a control apparatus. The apparatus is used in a vehicle, and the apparatus includes: an obtaining module, configured to obtain control information, where the control information indicates to turn on or off all sensing devices in a first range of the vehicle; and a control module, configured to control, based on the control information, all the sensing devices in the first range to be turned on or turned off.

According to the foregoing technical solution, all the sensing devices in the first range may be controlled to be turned on or turned off based on the control information, so that a working status of all the sensing devices in the first range can be conveniently and quickly switched. When all the sensing devices in the first range are turned off, functions (for example, functions such as human driving and in-cockpit entertainment) of other devices are not affected, so that it is ensured that traveling safety is not affected when all the sensing devices in the first range are turned off. In addition, because the data collected by the sensing device may relate to personal privacy of a driver and a person outside the vehicle, or may interfere with an ambient environment of the vehicle, when all the sensing devices in the first range are turned off, privacy protection may be provided for the driver and the person outside the vehicle, and the ambient environment of the vehicle may be protected from interference from the sensing devices, to meet a requirement of the driver or a related regulation.

In a possible implementation of the second aspect, when the vehicle is in an autonomous driving mode, the control module is further configured to: before controlling all the sensing devices in the first range to be turned off, control the vehicle to exit the autonomous driving mode.

According to the foregoing technical solution, because the vehicle in the autonomous driving mode usually needs the sensing device to be in a turn-on state, traveling safety of the autonomous vehicle is affected when the sensing device is turned off. Therefore, before all the sensing devices in the first range are controlled to be turned off, the vehicle may be controlled to exit the autonomous driving mode, for example, the vehicle may be switched to a human driving mode, to ensure traveling safety.

In a possible implementation of the first aspect, the sensing device in the first range includes at least one of a sensing device controlled by a cockpit domain controller CDC, a sensing device controlled by an intelligent driving domain controller ADC, and an in-vehicle wireless gateway.

According to the foregoing technical solution, controlling all the sensing devices controlled by the cockpit domain controller to be turned off may be turning off sensing devices such as an in-vehicle camera, so that privacy of a driver is protected. Controlling all the sensing devices controlled by the intelligent driving domain controller to be turned off may be turning off sensing devices such as an out-vehicle camera, a lidar, a millimeter-wave radar, an ultrasonic sensor, and an inertial navigation system, so that privacy of a person outside the vehicle can be protected, and an ambient environment of the vehicle can be protected from interference from the sensing devices. Controlling the in-vehicle wireless gateway to be turned off may be disconnecting the vehicle from an external wireless network.

In a possible implementation of the second aspect, when the sensing device in the first range is the sensing device controlled by the ADC and all the sensing devices are turned off, the control module is further configured to control the ADC to enter a sleep state.

According to the foregoing technical solution, the intelligent driving domain controller is configured to control the vehicle to perform autonomous driving. The vehicle usually exits the autonomous driving mode when all the sensing devices controlled by the intelligent driving domain controller are turned off. In this case, the intelligent driving domain controller may be controlled to enter the sleep state, to save energy of the vehicle.

In a possible implementation of the second aspect, the obtaining module is specifically configured to obtain the control information generated by the vehicle in response to a first operation of a driver.

According to the foregoing technical solution, all the sensing devices in the first range may be controlled to be turned on or turned off based on the operation of the driver, so that the driver switches a working status of all the sensing devices in the first range in one-click mode. This is more convenient and quicker.

In a possible implementation of the second aspect, the control information includes V2X information; and the obtaining module is specifically configured to receive the V2X information from a roadside device, where the roadside device is located at an edge of a specified area, and the specified area is an area in which environment information is not allowed to be collected.

According to the foregoing technical solution, all the sensing devices in the first range may be automatically controlled to be turned off based on the V2X information from the roadside device, so that working status of all the sensing devices in the first range can be conveniently switched.

In a possible implementation of the second aspect, the obtaining module is specifically configured to: obtain a first planned path of the vehicle, and generate a second planned path when the first planned path passes through a specified area, where the second planned path does not pass through the specified area, and the specified area is an area in which environment information is not allowed to be collected; send prompt information, where the prompt information is used to prompt a driver to update the first planned path to the second planned path; and trigger the control information when the driver does not update the first planned path to the second planned path.

According to the foregoing technical solution, based on the specified area in which the environment information is not allowed to be collected (that is, the specified area), when it is predicted that the planned path of the vehicle passes through the area in which the environment information is not allowed to be collected, the route is re-planned in advance, and the driver is automatically prompted whether to select a new route. If the driver selects the new route, the area may be avoided. When the driver does not select the new route, the sensing devices may be automatically switched to a state in which all sensing devices are turned off, so that violation can be avoided. In an example, when the driver does not select the new route, autonomous driving degradation may be automatically triggered, to ensure traveling safety.

In a possible implementation of the second aspect, the specified area includes: an area determined based on a selection operation of the driver in a map or an area selection list, where the area selection list includes one or more areas; or an area determined based on the first planned path and a specified area selection rule.

According to the foregoing technical solution, the specified area may be set based on an input of the driver, or the specified area may be automatically determined based on the first planned path and the specified area selection rule, so that the specified area can be flexibly determined.

According to a third aspect, this application provides a vehicle. The vehicle includes a sensing device and a processing apparatus. The processing apparatus is configured to perform the control method according to one or more of the first aspect or the several implementations of the first aspect, to control the sensing device to be turned on or turned off.

According to the foregoing technical solution, the processing apparatus may control all sensing devices in a first range to be turned on or turned off, so that a working status of all the sensing devices in the first range can be conveniently and quickly switched. In addition, the processing apparatus may turn off only all the sensing devices in the first range, without affecting functions (for example, functions such as human driving and entertainment) of other devices. This ensures that traveling safety is not affected when all the sensing devices in the first range are turned off, so that the working status of all the sensing devices in the first range can be securely switched. In addition, because data collected by the sensing device relates to personal privacy of a driver and a person outside the vehicle, and interferes with an ambient environment of the vehicle, when all the sensing devices in the first range are turned off, privacy protection may be provided for the driver and the person outside the vehicle, and the ambient environment of the vehicle may be protected from interference from the sensing devices.

In a possible implementation of the third aspect, the vehicle further includes a control apparatus, configured to control all sensing devices connected to the control apparatus to be turned on or off.

According to the foregoing technical solution, the control apparatus can conveniently control all the sensing devices connected to the control apparatus to be turned on or turned off, so that a working status of the sensing devices connected to the control apparatus can be conveniently switched.

In a possible implementation of the third aspect, the control apparatus includes a cockpit domain controller CDC and/or an intelligent driving domain controller ADC, where the CDC is configured to control all sensing devices connected to the CDC to be turned on or turned off, and the ADC is configured to control all sensing devices connected to the ADC to be turned on or turned off.

According to the foregoing technical solution, the working status of the sensing devices connected to the cockpit domain controller and the intelligent driving domain controller can be conveniently switched via the cockpit domain controller and the intelligent driving domain controller.

According to a fourth aspect, this application provides an electronic device, including a processor and a memory configured to store instructions executable by the processor. When executing the instructions, the processor is configured to implement the control method according to the first aspect or one or more implementations of the first aspect.

According to a fifth aspect, this application provides a computer-readable storage medium. The computer-readable storage medium stores computer program instructions. When the computer program instructions are executed by a processor, the control method according to the first aspect or one or more implementations of the first aspect is implemented.

According to a sixth aspect, this application provides a computer program product. When the computer program product runs on a computer, the computer is enabled to perform the control method according to the first aspect or one or more implementations of the first aspect.

For technical effects of the fourth aspect to the sixth aspect, refer to the first aspect, the second aspect, or the third aspect.

According to the following detailed description of example embodiments with reference to the accompanying drawings, other features and aspects of this application becomes clear.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1 is a diagram of a vehicle according to an embodiment of this application;
FIG. 2 is a flowchart of a control method according to an embodiment of this application;
FIG. 3 is a diagram of a partial network group according to an embodiment of this application;
FIG. 4 is a flowchart of another control method according to an embodiment of this application;
FIG. 5 is a flowchart of a method for controlling all sensing devices in a first range to be turned off according to an embodiment of this application;
FIG. 6 is a flowchart of a method for controlling all sensing devices in a first range to be turned on according to an embodiment of this application;
FIG. 7 is a flowchart of another control method according to an embodiment of this application;
FIG. 8 is a diagram of determining a specified area according to an embodiment of this application;
FIG. 9 is a flowchart of another control method according to an embodiment of this application;
FIG. 10 is a block diagram of a processing apparatus according to an embodiment of this application; and
FIG. 11 is a diagram of a structure of an electronic device according to an embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

Reference to "an embodiment" or "some embodiments" described in this specification means that one or more embodiments of this application include a specific feature, structure, or characteristic described with reference to embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The specific term "example" herein means "used as an example, embodiment or illustration". Any embodiment described as "example" is not necessarily explained as being superior or better than other embodiments. In addition, to better describe this application, numerous specific details are given in the following specific implementations. A person skilled in the art should understand that this application can also be implemented without some specific details.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The following first describes an example of an application scenario to which embodiments of this application are applicable.

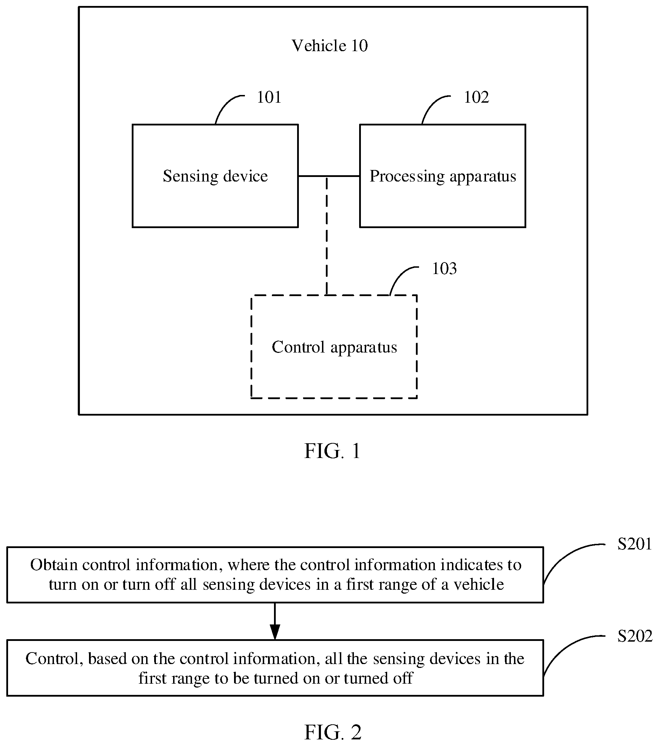

FIG. 1 is a diagram of a vehicle according to an embodiment of this application. As shown in FIG. 1, the vehicle 10 may include a sensing device 101 and a processing apparatus 102. For example, the vehicle 10 is a vehicle with an autonomous driving function. The sensing device 101 is configured to sense an ambient environment or an in-vehicle environment of the vehicle 10. For example, the sensing device 101 may include one or more of sensors such as a camera, a lidar, a millimeter-wave radar, an ultrasonic sensor, or an inertial navigation system, and there may be one or more sensing devices 101. This is not limited. The processing apparatus 102 is configured to perform the control method (for detailed descriptions, refer to the following content) in embodiments of this application, to control the sensing device 101 to be turned on or turned off.

A type of the processing apparatus 102 is not limited in embodiments of this application. For example, the processing apparatus 102 may be independently disposed, or may be integrated into another apparatus, or may be implemented by using software or a combination of software and hardware. In an example, the processing apparatus 102 may be a component in the vehicle 10, for example, an in-vehicle terminal, a body control module (body control module, BCM), an in-vehicle computing platform, an in-vehicle module, an in-vehicle assembly, an in-vehicle chip, an in-vehicle unit, or an in-vehicle sensor. In another example, the processing apparatus 102 may alternatively be a device or a system with a data processing capability other than the vehicle component, or a component or a chip disposed in these devices or systems. For example, the processing apparatus 102 may be a cloud server, a desktop computer, a portable computer, a network server, a palmtop computer, a mobile phone, a tablet computer, a wireless terminal device, an embedded device, or another device with a data processing function, or may be a component or a chip in these devices. In another example, the processing apparatus 102 may alternatively be a chip or a processor with a processing function. The processing apparatus 102 may include a plurality of processors. The processor may be a single-core (single-CPU) processor, or may be a multi-core (multi-CPU) processor.

For example, as shown in FIG. 1, the vehicle 10 may further include a control apparatus 103. The control apparatus 103 may be connected to one or more sensing devices 101, and the control apparatus 103 controls all the sensing devices 101 connected to the control apparatus 103 to be turned on or turned off. For example, the control apparatus 103 may receive a management packet of the processing apparatus 102, and control, in response to the management packet, all the sensing devices 101 connected to the control apparatus 103 to be turned on or turned off. In an example, the control apparatus 103 may include a cockpit domain controller (cockpit domain controller, CDC) and/or an intelligent driving domain controller (ADAS/AD domain controller, ADC). The cockpit domain controller is configured to control all sensing devices 101 (for example, an out-vehicle camera, a lidar, a millimeter-wave radar, an ultrasonic sensor, and an inertial navigation system) connected to the cockpit domain controller to be turned on or off. The intelligent driving domain controller is configured to control all sensing devices 101 (for example, an in-vehicle camera) connected to the intelligent driving domain controller to be turned on or off. It may be understood that the cockpit domain controller and the intelligent driving domain controller may be separately disposed, or may be integrated into a same domain controller. This is not limited.

For example, the vehicle 10 may further include an interaction device (not shown in the figure). The interaction device may be configured to: send information to a driver and receive an instruction of the driver. For example, the interaction device may include a steering wheel, a central control screen of an in-vehicle infotainment system, and the like. The vehicle 10 may receive the instruction of the driver through a button on a vehicle body, a virtual button on the central control screen of the in-vehicle infotainment system, or the like.

For example, the vehicle 10 may further include a communication device (not shown in the figure). The communication device may be used by the vehicle 10 to communicate with another device, for example, may be used by the vehicle 10 to communicate with a mobile terminal, a cloud device, another vehicle, a roadside device, or the like by using a wireless communication connection, for example, 2G/3G/4G/5G, Bluetooth, frequency modulation (frequency modulation, FM), a wireless local area network (wireless local area network, WLAN), a long time evolution (long time evolution, LTE) network, vehicle-to-everything (vehicle-to-everything, V2X), vehicle-to-vehicle (vehicle-to-vehicle, V2V), and the like. For example, the communication device may include an in-vehicle gateway (gateway, GW), for example, a remote information processor (for example, a telematics box, T-Box). In an example, the processing apparatus 102 may control the in-vehicle wireless gateway to be turned on or turned off.

It should be noted that the foregoing application scenario described in this embodiment of this application is intended to describe the technical solutions in embodiments of this application more clearly, and does not constitute a limitation on the technical solutions provided in embodiments of this application. A person of ordinary skill in the art may know that, for emergence of another similar or new scenario, the technical solutions provided in embodiments of this application are also applicable to a similar technical problem.

The following describes in detail the control method provided in embodiments of this application.

FIG. 2 is a flowchart of a control method according to an embodiment of this application. The method may be performed by the processing apparatus 102 and/or the control apparatus 103 in FIG. 1. As shown in FIG. 2, the method may include the following steps.

S201: Obtain control information, where the control information indicates to turn on or turn off all sensing devices in a first range of a vehicle.

For example, the sensing device may be a sensing sensor mounted on the vehicle. For example, the sensing device may be the sensing device 101 in FIG. 1.

In a possible implementation, the sensing device in the first range may include at least one of a sensing device controlled by a cockpit domain controller, a sensing device controlled by an intelligent driving domain controller, and an in-vehicle wireless gateway (for example, a T-box). In an example, the sensing device in the first range may be the sensing device controlled by the cockpit domain controller, or the sensing device controlled by the intelligent driving domain controller or the in-vehicle wireless gateway. In another example, the sensing device in the first range may be the sensing device controlled by the cockpit domain controller, or the sensing device controlled by the intelligent driving domain controller or the in-vehicle wireless gateway.

In a possible implementation, the sensing device in the first range may include sensors of a same type or a plurality of types. In an example, the sensing device in the first range may include a detection sensor, for example, a lidar, a millimeter-wave radar, or an ultrasonic sensor. In another example, the sensing device in the first range may include a video sensor, for example, an in-vehicle camera or an out-vehicle camera. In another example, the sensing device in the first range may include a position sensor, for example, an inertial navigation system or a global positioning system. In another example, the sensing device in the first range may include a detection sensor and a video sensor.

For example, the processing apparatus may obtain the control information via an interaction device, a communication device, or the like. For example, the processing apparatus may obtain the control information generated by the vehicle in response to a first operation of a driver. For another example, the processing apparatus receives vehicle-to-everything V2X information (namely, the control information) from a roadside device. For another example, the processing apparatus may trigger the control information based on a planned path of the vehicle and a specified area in which environment information is not allowed to be collected. For specific descriptions, refer to the following related descriptions. It may be understood that, at a moment, the processing device may obtain control information A, where the control information A is used to turn on all sensing devices in the first range; and at another moment, the processing device may obtain control information B, where the control information B is used to turn off all the sensing devices in the first range.

S202: Control, based on the control information, all the sensing devices in the first range to be turned on or turned off.

For example, a control link of the sensing device in the first range may be a controller area network (controller area network, CAN), an Ethernet, a hard wire, or the like.

In an example, the sensing device in the first range may be directly connected to the processing apparatus through the control link, and the processing apparatus may control, through the control link, all the sensing devices in the first range to be turned on or turned off. For example, the processing apparatus may be the processing apparatus 102 in FIG. 1, and the sensing devices in the first range may be all the sensing devices 101 in FIG. 1. These sensing devices 101 are directly connected to the processing apparatus 102 through the control link. After obtaining the control information, the processing apparatus 102 may directly control, through the control link, all these sensing devices 101 to be turned on or turned off.

In another example, the sensing device in the first range may be connected to a corresponding domain controller (for example, the cockpit domain controller or the intelligent driving domain controller) through a control link. After the domain controller receives a management packet of the processing apparatus, the domain controller controls, through the control link in response to the management packet, all the sensing devices in the first range to be turned on or turned off. For example, the processing apparatus may be the processing apparatus 102 in FIG. 1, and the sensing device in the first range may be the sensing device 101 directly connected to the control apparatus 103 in FIG. 1. After obtaining the control information, the processing apparatus 101 sends a management packet to the control apparatus 103. In response to the management packet, the control apparatus 103 controls, through the control link, all the sensing devices 101 to be turned on or turned off.

In a possible implementation, the sensing devices in the first range and/or the domain controllers that control the sensing devices in the first range may be grouped into a partial network (partial network, PN) group. The sensing devices in the PN group are triggered to be turned off or turned on only when a network management packet in the PN group is received. In this way, the sensing devices in the first range and/or the domain controllers that control the sensing devices in the first range are grouped into one PN group, so that all the sensing devices in the first range can be controlled to be turned on or turned off, and the working status of all the sensing devices in the first range can be conveniently and quickly switched, that is, switched from on to off or switched from off to on.

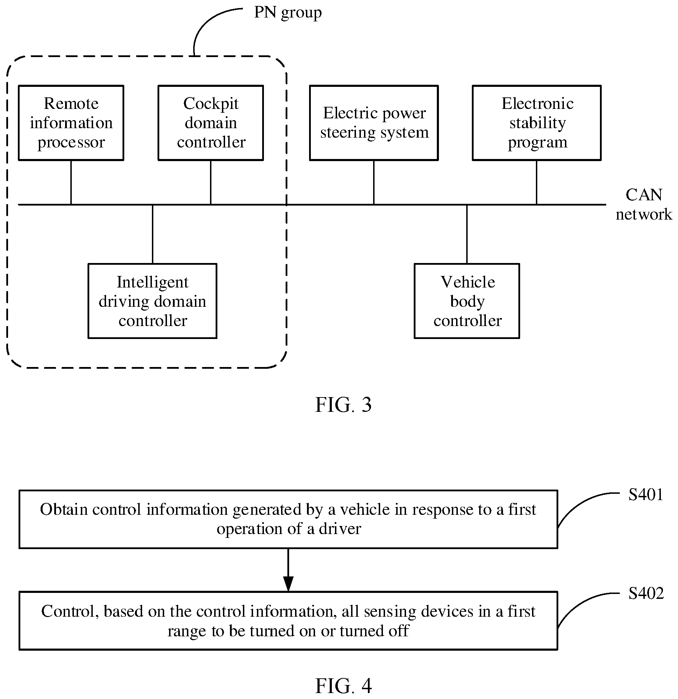

For example, the sensing devices in the first range may include the sensing device controlled by the cockpit domain controller, the sensing device controlled by the intelligent driving domain controller, and a remote information processor. FIG. 3 is a diagram of a partial network group according to an embodiment of this application. As shown in FIG. 3, a PN group includes a remote information processor, a cockpit domain controller, and an intelligent driving domain controller. The PN group is connected to a vehicle body control module (namely, a processing apparatus) in a vehicle, an electric power steering (electric power steering, EPS) system, an electronic stability program (electronic stability program, ESP) through a CAN network. After receiving the control information, the vehicle body control module may trigger, through the CAN network, the cockpit domain controller, the intelligent driving domain controller, and the remote information processor in the PN group to change statuses, to control all sensing devices in a first range to be turned on or off. In this way, the cockpit domain controller, the intelligent driving domain controller, and the in-vehicle remote information processor are grouped into one PN group, so that a sensing device controlled by the cockpit domain controller, a sensing device controlled by the intelligent driving domain controller, and the remote information processor can be all turned on or off, and other functions (for example, functions such as human driving and in-cockpit entertainment) of the cockpit domain controller and the intelligent driving domain controller other than a sensing function are not affected. This ensures that traveling safety is not affected when all the sensing devices in the first range are turned off. In this way, a working status of all the sensing devices in the first range are conveniently, quickly, and securely switched.

For example, that all the sensing devices in the first range are turned off may be that all the sensing devices in the first range are turned off, or may be that all the sensing devices in the first range are in a state of being powered on but not working. It may be understood that the state of being powered on but not working may also be referred to as a silent state, and the sensing device in this state does not collect data in an environment and can be quickly woken up when necessary. For example, a millimeter-wave radar is powered on but does not emit a wave, a lidar is powered on but does not emit laser, a camera is powered on but does not collect an image, and the remote information processor does not establish a link connection to a satellite or a base station (for example, a wireless base station or a real-time kinematic (real-time kinematic, RTK) base station).

In a possible implementation, when the vehicle is in an autonomous driving mode, the method further includes: before all the sensing devices in the first range are controlled to be turned off, controlling the vehicle to exit the autonomous driving mode. For example, exiting the autonomous driving mode may include switching to a human driving mode, or degrading the driving mode. For example, a level corresponding to the autonomous driving mode may use an autonomous driving mode level standard formulated by the National Highway Traffic Safety Administration (National Highway Traffic Safety Administration, NHTSA) or the American Society of Automotive Engineers (Society of Automotive Engineers, SAE), or may set a level of the autonomous driving mode based on an actual requirement. This is not particularly limited in this embodiment of this application. For example, the American Society of Automotive Engineers classifies the autonomous driving mode into six levels: L0: no automation (Leve 0: No Automation), indicating that a human driver is fully responsible for driving a vehicle; L1: driver assistance (Level 1: Driver Assistance), indicating that the vehicle provides driving for one of a steering wheel operation and an acceleration/deceleration operation, and the human driver is responsible for other driving operations; L2: partial automation (Level 2: Partial Automation), indicating that the vehicle provides driving for a plurality of operations of the steering wheel operation and the acceleration/deceleration operation, and the human driver is responsible for other driving actions; L3: conditional automation (Level 3: Conditional Automation), indicating that the vehicle completes most driving operations, and the human driver needs to keep a focus for safety; L4: high automation (Level 4: High Automation), indicating that the vehicle completes all driving operations, the human driver does not need to maintain attention, but a road and an environment condition are limited; and L5: full automation (Level 5: Full Automation), indicating that the vehicle completes all driving operations, the human driver does not need to maintain attention, and any driving scenario is applicable. In an example, when the vehicle is in an autonomous driving mode of the L5 level, the vehicle may exit the autonomous driving mode of the L5 level, and degrade to an autonomous driving mode of the L0 level or an autonomous driving mode of the L1 level. In another example, when the vehicle is in an autonomous driving mode of the L3 level, the vehicle may exit the autonomous driving mode of the L3 level, and degrade to an autonomous driving mode of the L2 level, to implement smooth degradation. Because the vehicle in the autonomous driving mode usually needs the sensing device to be in a turn-on state, traveling safety of the autonomous vehicle is affected when the sensing device is turned off. Therefore, before all the sensing devices in the first range are controlled to be turned off, the vehicle may be controlled to exit the autonomous driving mode, for example, the vehicle may be switched to a human driving mode, to ensure traveling safety.

In a possible implementation, when all the sensing devices controlled by the domain controller are turned off, the domain controller may be controlled to enter a sleep state. In an example, when the sensing devices in the first range are the sensing devices controlled by the intelligent driving domain controller, and all these sensing devices are turned off, the method further includes: controlling the intelligent driving domain controller to enter the sleep state. The intelligent driving domain controller is configured to control the vehicle to perform autonomous driving. The vehicle usually exits the autonomous driving mode when all the sensing devices controlled by the intelligent driving domain controller are turned off. In this case, the intelligent driving domain controller may be controlled to enter the sleep state, to save energy of the vehicle.

In this way, different from a manner in which the entire vehicle sleeps and wakes up, a single sensor sleeps and wakes up, or the entire domain controllers sleep and wake up together to switch a sensor working status, in the foregoing steps S201 and S202 of this embodiment of this application, all the sensing devices in the first range may be controlled to be turned on or turned off based on the control information, so that a working status of all the sensing devices in the first range can be conveniently and quickly switched. When all the sensing devices in the first range are turned off, functions (for example, functions such as human driving and in-cockpit entertainment) of other devices are not affected, so that it is ensured that traveling safety is not affected when all the sensing devices in the first range are turned off. In addition, because the data collected by the sensing device may relate to personal privacy of a driver and a person outside the vehicle, or may interfere with an ambient environment of the vehicle, when all the sensing devices in the first range are turned off, privacy protection may be provided for the driver and the person outside the vehicle, and the ambient environment of the vehicle can be protected from interference of the sensing devices, to meet a requirement of the driver or a related regulation.

In an example, controlling all the sensing devices controlled by the cockpit domain controller to be turned off may be turning off sensing devices such as an in-vehicle camera, so that privacy of a driver is protected. Controlling all the sensing devices controlled by the intelligent driving domain controller to be turned off may be turning off sensing devices such as an out-vehicle camera, a lidar, a millimeter-wave radar, an ultrasonic sensor, and an inertial navigation system, so that privacy of a person outside the vehicle can be protected, and an ambient environment of the vehicle can be protected from interference from the sensing devices. Controlling the in-vehicle wireless gateway to be turned off may be disconnecting the vehicle from an external wireless network. In another example, all detection sensors may be separately controlled to be turned on or turned off, or all video sensors may be separately controlled to be turned on or turned off, or all position sensors may be separately controlled to be turned on or turned off, so that working statuses of different types of sensors can be conveniently switched, to meet requirements in different scenarios.

FIG. 4 is a flowchart of another control method according to an embodiment of this application. The method may be performed by the processing apparatus 102 and/or the control apparatus 103 in FIG. 1. As shown in FIG. 4, the method may include the following steps.

S401: Obtain control information generated by a vehicle in response to a first operation of a driver, where the control information indicates to turn on or turn off all sensing devices in a first range of the vehicle.

For example, the first operation may be a press operation, a touch operation, a voice operation, a gesture operation, a remote operation, or the like. For example, the driver may generate the control information by pressing a button on a vehicle body, touching a button on a central control screen of an in-vehicle infotainment system, or performing a remote operation via a mobile phone.

In an example, a sensing device turn-off button and a sensing device turn-on button may be separately disposed on the vehicle body (for example, on a steering wheel). When the driver presses the sensing device turn-off button, control information may be generated to indicate to turn off all the sensing devices in the first range of the vehicle. When the driver presses the sensing device turn-on button, control information may be generated to indicate to turn on all the sensing devices in the first range of the vehicle. In another example, a button for controlling turning on and off the sensing devices may be disposed on the vehicle body. The driver may press the button for the first time to generate control information to control all the sensing devices in the first range to be turned off, and the driver may press the button again to generate control information to control all the sensing devices in the first range to be turned on.

S402: Control, based on the control information, all the sensing devices in the first range to be turned on or turned off.

For a specific implementation of this step, refer to related descriptions in step S202 in FIG. 2.

In this embodiment of this application, all the sensing devices in the first range may be controlled to be turned on or turned off based on the operation of the driver, so that the driver switches a working status of all the sensing devices in the first range in one-click mode. This is more convenient and quicker.

In an example, a possible implementation of controlling all the sensing devices in the first range to be turned off in step S402 in FIG. 4 is described by using an example in which the sensing devices in the first range include a sensing device controlled by a cockpit domain controller, a sensing device controlled by an intelligent driving domain controller, and a remote information processor, and the first operation is pressing the button on the vehicle body. For example, the cockpit domain controller, the intelligent driving domain controller, and the remote information processor may be grouped into a same PN group.

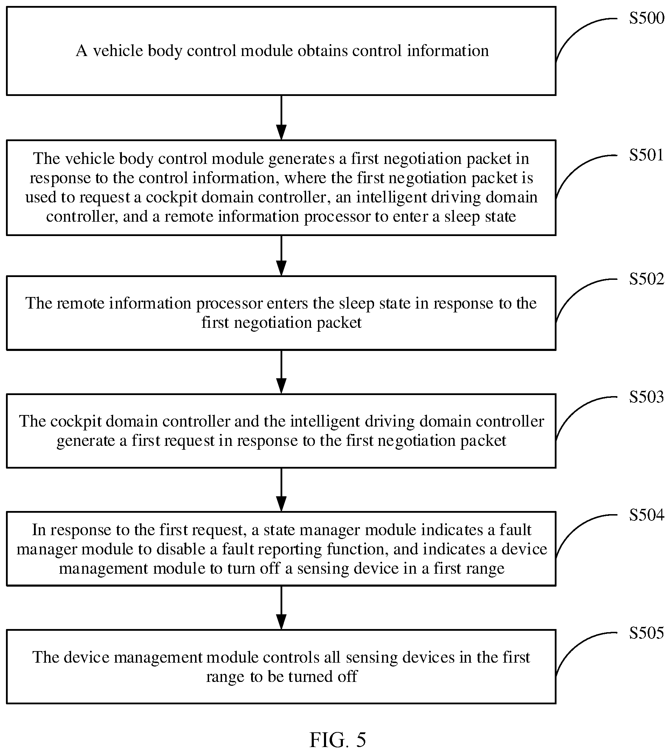

FIG. 5 is a flowchart of a method for controlling all sensing devices in a first range to be turned off according to an embodiment of this application. As shown in FIG. 5, the method may include the following steps.

S500: A vehicle body control module obtains control information.

For example, a sensing device turn-off button may be disposed on a vehicle body. When a driver presses the sensing device turn-off button, the control information may be generated to indicate to turn off a sensing device controlled by a cockpit domain controller, a sensing device controlled by an intelligent driving domain controller, and a remote information processor.

S501: The vehicle body control module generates a first negotiation packet in response to the control information, where the first negotiation packet is used to request the cockpit domain controller, the intelligent driving domain controller, and the remote information processor to enter a sleep state.

For example, the first negotiation packet may be a network management packet, and is used to perform network negotiation with a PN group, so as to request the remote information processor and all the sensing devices controlled by the cockpit domain controller and the intelligent driving domain controller in the PN group to be all turned off.

S502: The remote information processor enters the sleep state in response to the first negotiation packet.

Because the remote information processor is used for remote control of a vehicle, the remote information processor enters the sleep state in response to the first negotiation packet, so as to disconnect the vehicle from an outside wireless network. In addition, the remote information processor enters the sleep state to save energy of the vehicle.

S503: The cockpit domain controller and the intelligent driving domain controller generate a first request in response to the first negotiation packet.

For example, the cockpit domain controller and the intelligent driving domain controller may generate the first request in response to a negotiation request of the first negotiation packet. The first request is used to request a state manager (state manager, SM) module to switch a state to a state in which all the sensing devices are turned off.

S504: In response to the first request, the state manager module indicates a fault manager (fault manager, FM) module to disable a fault reporting function, and indicates a device management module to turn off the sensing devices in the first range.

S505: The device management module controls all the sensing devices in the first range to be turned off.

For example, the device management module may control the sensing devices in the first range to access a service process to sleep, where the service process is used to manage the sensing devices. The service process may trigger all the sensing devices in the first range to be turned off, and then the service process sleeps.

For example, when the vehicle is in an autonomous driving mode, before all the sensing devices in the first range are turned off, a fault manager module may notify the vehicle to perform autonomous driving degradation or exit the autonomous driving mode.

For example, when all the sensing devices controlled by the intelligent driving domain controller are turned off, the intelligent driving domain controller may be controlled to enter the sleep state, to save energy of the vehicle.

For example, after all the sensing devices in the first range are turned off, the fault manager module may trigger a micro controller unit (micro controller unit, MCU) to monitor the sensing devices that are turned off. Monitoring the sensing devices that are turned off can detect an exception of the sensing devices in time. This ensures safety of the vehicle.

In this way, in this embodiment of this application, the sensing device controlled by the cockpit domain controller, the sensing device controlled by the intelligent driving domain controller, and the remote information processor may be all controlled to be turned off in one-click mode by pressing a button on the vehicle body by the driver. In addition, functions other than a sensing function in the cockpit domain controller and the intelligent driving domain controller, and functions of other modules (that is, modules other than that in the PN group) of the vehicle are not affected, so that the driver conveniently and quickly turns off all the sensing devices in the first range by one click while normal functions such as human driving and entertainment of the vehicle are not affected. When all the sensing devices are turned off, privacy protection can be provided for the driver and a person outside the vehicle, and an ambient environment of the vehicle can be protected from interference from the sensing devices. In addition, an energy saving effect is achieved when the remote information processor and the intelligent driving domain controller enter the sleep state.

In another example, a possible implementation of controlling all the sensing devices in the first range to be turned on in step S402 in FIG. 4 is described by using an example in which the sensing devices in the first range include a sensing device controlled by a cockpit domain controller, a sensing device controlled by an intelligent driving domain controller, and a remote information processor, and the first operation is pressing the button on the vehicle body. For example, the cockpit domain controller, the intelligent driving domain controller, and the remote information processor may be grouped into a same PN group.

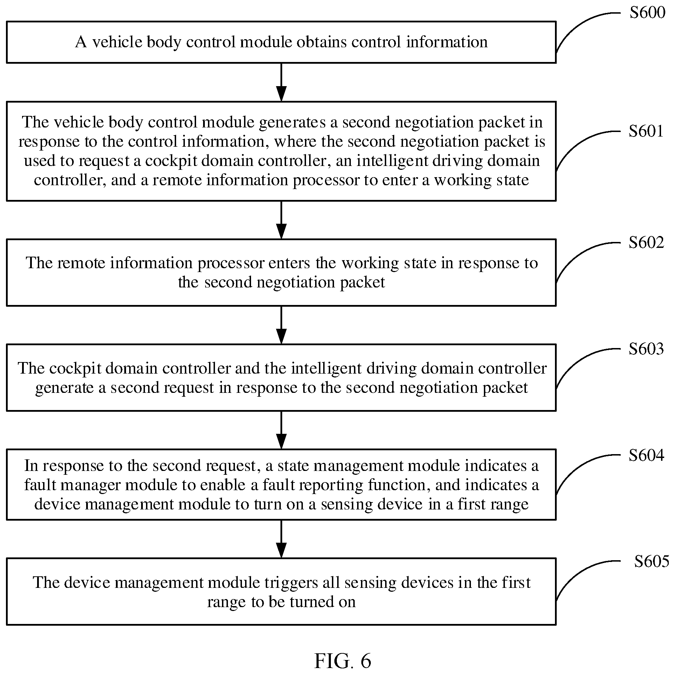

FIG. 6 is a flowchart of a method for controlling all sensing devices in a first range to be turned on according to an embodiment of this application. As shown in FIG. 6, the method may include the following steps.

S600: A vehicle body control module obtains control information.

For example, a sensing device turn-on button may be disposed on a vehicle body. When a driver presses the sensing device turn-on button, the control information may be generated to indicate to turn on a sensing device controlled by a cockpit domain controller, a sensing device controlled by the intelligent driving domain controller, and a remote information processor. The vehicle body control module obtains the control information.

S601: The vehicle body control module generates a second negotiation packet in response to the control information, where the second negotiation packet is used to request the cockpit domain controller, the intelligent driving domain controller, and the remote information processor to enter a normal working state.

The vehicle body control module generates a second negotiation packet in response to the control information. For example, the second negotiation packet may be a network management packet, and is used to perform network negotiation with a PN group, to request the sensing device controlled by the cockpit domain controller, the sensing device controlled by the intelligent driving domain controller, and the remote information processor to be all turned on.

S602: The in-vehicle remote information processor enters a normal working state in response to the second negotiation packet.

S603: The cockpit domain controller and the intelligent driving domain controller generate a second request in response to the second negotiation packet.

For example, the cockpit domain controller and the intelligent driving domain controller may generate a second request in response to a negotiation request of the second negotiation packet. The second request is used to request a state management module to perform state switching and exit a state in which all the sensing devices are turned off.

S604: In response to the second request, the state management module indicates a fault manager module to enable a fault reporting function, and indicates a device management module to turn on the sensing devices in the first range.

S605: The device management module triggers all the sensing devices in the first range to be turned on.

For example, the device management module may control the sensing devices in the first range to access a service process for wakeup. The service process may wake up the sensing devices in the first range. After all the sensing devices in the first range are successfully woken up (that is, after all the sensing devices in the first range are turned on), the service process may enter a normal working state.

For example, after all the sensing devices in the first range are turned on, the fault manager module may trigger an MCU to monitor the sensing devices that are turned on.

In this way, in this embodiment of this application, the sensing device controlled by the cockpit domain controller, the sensing device controlled by the intelligent driving domain controller, and the remote information processor may be all controlled to be turned on in one-click mode by pressing the button on the vehicle body by the driver, so that all the sensing devices in the first range can be conveniently and quickly turned on in one-click mode.

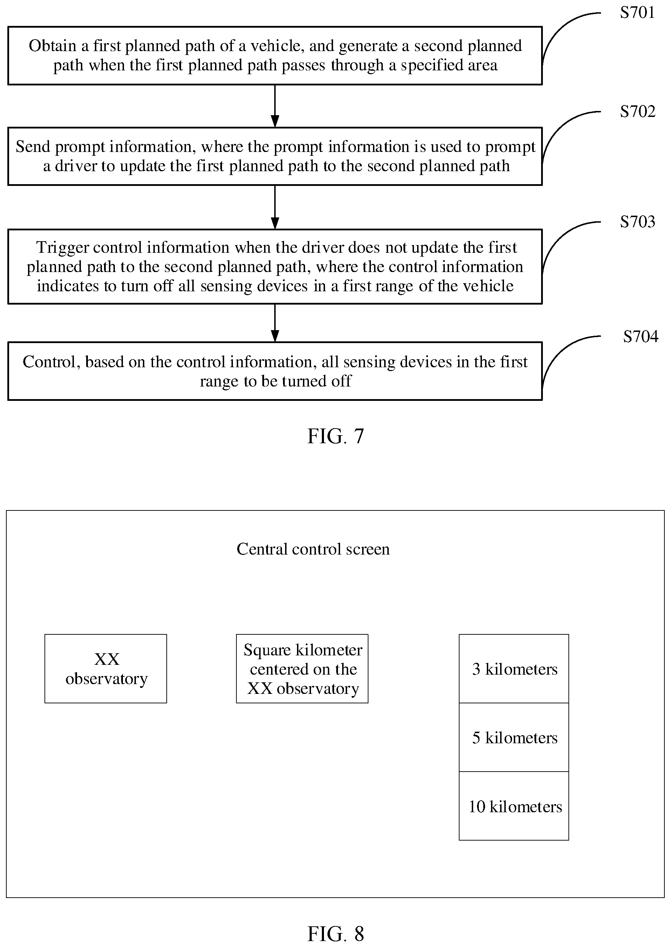

FIG. 7 is a flowchart of another control method according to an embodiment of this application. The method may be performed by the processing apparatus 102 and/or the control apparatus 103 in FIG. 1. As shown in FIG. 7, the method may include the following steps.

S701: Obtain a first planned path of a vehicle, and generate a second planned path when the first planned path passes through a specified area.

The first planned path is a planned path from a current location of the vehicle to a destination. For example, the first planned path may be automatically set by a navigation system.

The second planned path does not pass through the specified area, and the specified area is an area in which environment information is not allowed to be collected, for example, an area like an observatory or a military base, or an area pre-specified by a driver.

In a possible implementation, the specified area may include an area determined based on a selection operation of the driver in a map or an area selection list, where the area selection list includes one or more areas. For example, the driver may perform a selection operation in advance through a central control screen of an in-vehicle infotainment system, to determine the specified area. In an example, the driver may input a single-point location on the central control screen of the in-vehicle infotainment system, the central control screen of the in-vehicle infotainment system may display the area selection list, and the driver may select, by using the area selection list, a square kilometer centered on a single-point location, to determine the specified area. FIG. 8 is a diagram of determining a specified area according to an embodiment of this application. As shown in FIG. 8, a driver inputs "XX observatory" on a central control screen of an in-vehicle infotainment system, an area selection list is displayed on the central control screen of the in-vehicle infotainment system, and the driver can select a square kilometer centered on the XX observatory, for example, 3 kilometers, 5 kilometers, or 10 kilometers. If the driver selects 3 kilometers, the specified area is 3 kilometers centered on the XX observatory. If the driver selects 5 kilometers, the specified area is 5 kilometers centered on the observatory. If the driver selects 10 kilometers, the specified area is 10 kilometers centered on the observatory. In another example, a map may be displayed on the central control screen of the in-vehicle infotainment system, and the driver may determine the specified area by drawing on the map. For example, the driver may draw a circle on the map, and an area in the circle is the specified area.

For example, areas in which environment information is not allowed to be collected as required by current laws and regulations may be obtained in advance through a network, and are used as specified areas. In addition, these areas may be automatically imported into the vehicle for storage. For example, the areas in which environment information is not allowed to be collected may be obtained from the Provisional Regulations on Radio Management of Automotive Radars, and are used as the specified areas. For example, the vehicle may update the specified areas based on the areas in which the environment information is not allowed to be collected and that are specified in latest laws and regulations. For example, information about the determined specified areas may be recorded, the recorded information about the specified areas is stored in ROM memory space of an intelligent driving control domain after structured data is formed by using the recorded information about the specified area, so that it can be ensured that data in the specified area is not lost when the vehicle is in a flameout state.

In a possible implementation, the specified area may include an area determined based on the first planned path and a specified area selection rule. For example, the specified area selection rule may be as follows: If the first planned path passes through an area in which environment information is not allowed to be collected, and there is an intersection at which a u-turn or a turn can be made between the first planned path and the area, the area is determined as the specified area. In this way, because the first planned path passes through the specified area, a new route is planned in advance, so that the vehicle can avoid the specified area by making the u-turn or making the turn.

For example, when the vehicle is in an autonomous driving mode, traveling information, for example, a location, a vehicle speed, and a traveling direction of the vehicle may be obtained through an inertial navigation system. Whether the vehicle is to enter the specified area may be predicted based on the traveling information, the first planned path, and location information of the specified area. When it is predetermined that the vehicle is to enter the specified area, before the vehicle travels to the specified area, a route may be re-planned to generate a second planned path, and the second planned path may avoid the specified area.

S702: Send prompt information, where the prompt information is used to prompt the driver to update the first planned path to the second planned path.

For example, when it is predicted that the vehicle is to enter the specified area, prompt information may be sent to the driver. In an example, the prompt information may be voice information, text information, or the like. For example, the prompt information may be sending a voice "You are about to enter a specified area. Do you want to select a new route?" to the driver.

S703: Trigger control information when the driver does not update the first planned path to the second planned path, where the control information indicates to turn off all sensing devices in a first range of the vehicle.

For example, after receiving the prompt information, the driver may choose whether to update the first planned path to the second planned path. When the driver chooses to update the first planned path to the second planned path, the vehicle may travel along the second planned path to avoid the specified area. For example, if the vehicle is in the autonomous driving mode, the vehicle may continue to maintain the autonomous driving mode, and autonomous driving degradation does not need to be triggered.

For example, when the driver does not update the first planned path to the second planned path, the control information may be triggered.

For example, when the driver does not update the first planned path to the second planned path, autonomous driving degradation may be automatically triggered. For example, the vehicle may be controlled to exit the autonomous driving mode, or the driver may be notified to take over driving and enter a human driving mode, to ensure traveling safety.

S704: Control, based on the control information, all the sensing devices in the first range to be turned off.

For a specific implementation of this step, refer to related descriptions in step S202 in FIG. 2.

Further, when all the sensing devices in the first range are in a turn-off state, the driver may manually trigger the control information based on a requirement, to control the sensing device to switch a working status from the turn-off state to a turn-on state. For example, by pressing a button on a vehicle body or the like, the driver may manually exit the state in which all the sensing devices are turned off. In an example, when the vehicle is still in the specified area, the driver may be prompted that the working status of the sensing device fails to be switched. In another example, if the current vehicle has left the specified area, the sensing devices may be switched to a state in which all the sensing devices are turned on.

In this embodiment of this application, based on the specified area in which the environment information is not allowed to be collected (that is, the specified area), when it is predicted that the planned path of the vehicle passes through the area in which the environment information is not allowed to be collected, the route is re-planned in advance, and the driver is automatically prompted whether to select a new route. If the driver selects the new route, the area may be avoided. When the driver does not select the new route, the sensing devices may be automatically switched to a state in which all sensing devices are turned off, so that violation can be avoided. In an example, when the driver does not select the new route, autonomous driving degradation may be automatically triggered, to ensure traveling safety.

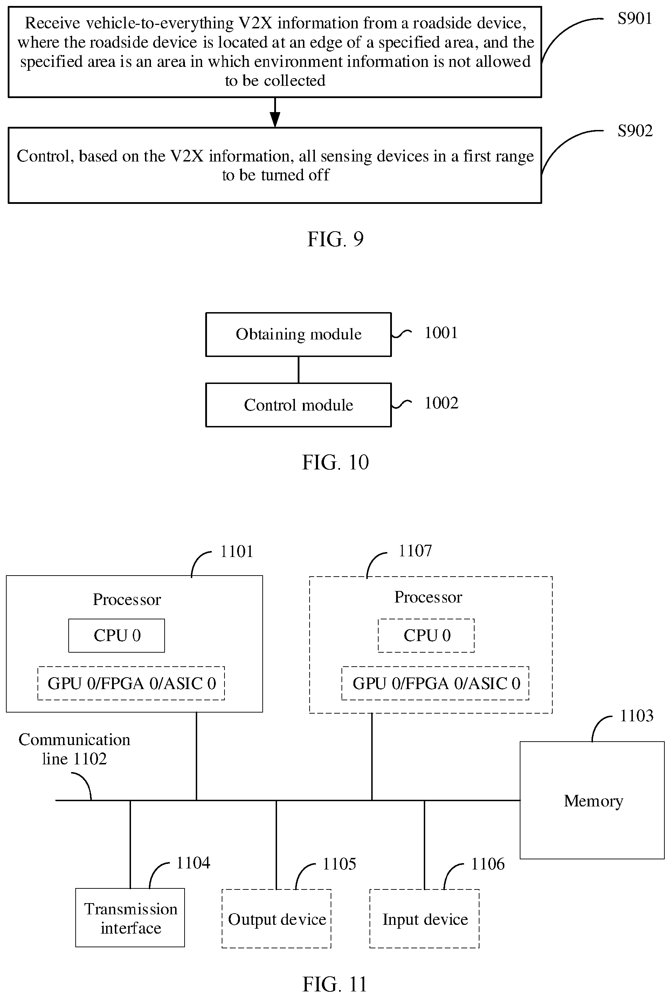

FIG. 9 is a flowchart of another control method according to an embodiment of this application. The method may be performed by the processing apparatus 102 and/or the control apparatus 103 in FIG. 1. As shown in FIG. 9, the method may include the following steps:

S901: Receive vehicle-to-everything V2X information (namely, control information) from a roadside device, where the roadside device is located at an edge of a specified area, and the specified area is an area in which environment information is not allowed to be collected.

For example, the specified area may be an area in which environment information is not allowed to be collected as required by current laws and regulations. For example, the specified area may be an area in which environment information is not allowed to be collected as specified in the Provisional Regulations on Radio Management of Automotive Radars.

For example, the roadside device may be a transportation facility that can broadcast V2X information, for example, a telegraph pole or a traffic signal light. For example, a manager of the specified area may build a transportation facility at an edge of the specified area, to broadcast information to a vehicle passing through the area through V2X, so as to prompt that the environment information is not allowed to be collected in the area.

For example, the processing apparatus may receive the V2X information from the roadside device through a remote information processor.

S902: Control, based on the V2X information, all sensing devices in a first range to be turned off.

For example, when the vehicle is about to enter the specified area, the vehicle may receive V2X information broadcast by the roadside device, and may control, based on the V2X information, all the sensing devices in the first range to be turned off. For a procedure of controlling all the sensing devices in the first range to be turned off, refer to related descriptions in step S202 in FIG. 2.

In this embodiment of this application, all the sensing devices in the first range may be automatically controlled to be turned off based on the V2X information from the roadside device, so that working status of all the sensing devices in the first range can be conveniently switched.

In an example, after the vehicle enters an autonomous driving mode, when the vehicle is about to enter the area in which environment information is not allowed to be collected, the V2X information from the roadside device may be received, all the sensing devices in the first range are automatically controlled to be turned off, and the vehicle may be notified to exit the autonomous driving mode while the driver is notified to take over driving and a human driving mode is entered. After all the sensing devices in the first range are turned off, the driver may manually control, by pressing a button on a vehicle body or the like, all the sensing devices to be turned on. If the current vehicle is still located in the area in which environment information is not allowed to be collected, the driver is prompted that the working status of the sensing device fails to be switched. If the current vehicle has left the area in which the environment information is not allowed to be collected, all the sensing devices in the first range may be controlled to be turned on. In this way, in a vehicle-road synergy manner, all the sensing devices in the first range may be automatically controlled to be turned off based on the V2X information from the roadside device, so that the working status of the sensing device can be conveniently switched. In addition, when all the sensing devices are turned off, the autonomous driving mode may be exited, and the driver is notified to enter the human driving mode, to ensure traveling safety.

In another example, a preset area may be a road or an area that supports autonomous driving. When the vehicle enters or leaves these roads or areas, the vehicle may be reminded or triggered to upgrade or degrade autonomous driving. For example, when the vehicle enters, from a road that allows an L3-level automated driving mode, a road that allows only an L2-level automated driving mode, the vehicle may receive V2X information at a junction of two road segments, the driver may be reminded to lower an autonomous driving level from the L3 level to the L2 level, or the vehicle may automatically lower an autonomous driving level from the L3 level to the L2 level.

Based on a same inventive concept as the foregoing method embodiments, an embodiment of this application further provides a processing apparatus. The processing apparatus may be configured to perform the technical solutions described in the foregoing method embodiments. For example, steps of the control method shown in any one of FIG. 2, FIG. 4, FIG. 5, FIG. 6, FIG. 7, or FIG. 9 may be performed.

FIG. 10 is a block diagram of a processing apparatus according to an embodiment of this application. As shown in FIG. 10, the apparatus may include:
an obtaining module 1001, configured to obtain control information, where the control information indicates to turn on or turn off all sensing devices in a first range of the vehicle; and
a control module 1002, configured to control, based on the control information, all the sensing devices in the first range to be turned on or turned off.

In this embodiment of this application, all the sensing devices in the first range may be controlled to be turned on or turned off based on the control information, so that a working status of all the sensing devices in the first range can be conveniently and quickly switched. When all the sensing devices in the first range are turned off, functions (for example, functions such as human driving and in-cockpit entertainment) of other devices are not affected, so that it is ensured that traveling safety is not affected when all the sensing devices in the first range are turned off. In addition, because the data collected by the sensing device may relate to personal privacy of a driver and a person outside the vehicle, or may interfere with an ambient environment of the vehicle, when all the sensing devices in the first range are turned off, privacy protection may be provided for the driver and the person outside the vehicle, and the ambient environment of the vehicle may be protected from interference from the sensing devices, to meet a requirement of the driver or a related regulation.

In a possible implementation, when the vehicle is in an autonomous driving mode, the control module 1002 is further configured to: before controlling all the sensing devices in the first range to be turned off, control the vehicle to exit the autonomous driving mode.

In a possible implementation, the sensing device in the first range includes at least one of a sensing device controlled by a cockpit domain controller, a sensing device controlled by an intelligent driving domain controller, and an in-vehicle wireless gateway.

In a possible implementation, when the sensing device in the first range is the sensing device controlled by the intelligent driving domain controller, and all the sensing devices are turned off, the control module 1002 is further configured to control the intelligent driving domain controller to enter a sleep state.

In a possible implementation, the obtaining module 1001 is specifically configured to obtain the control information generated by the vehicle in response to a first operation of a driver.

In a possible implementation, the control information includes V2X information; and the obtaining module 1001 is specifically configured to receive the V2X information from a roadside device, where the roadside device is located at an edge of a specified area, and the specified area is an area in which environment information is not allowed to be collected.

In a possible implementation, the obtaining module 1001 is specifically configured to: obtain a first planned path of the vehicle, and generate a second planned path when the first planned path passes through a specified area, where the second planned path does not pass through the specified area, and the specified area is an area in which environment information is not allowed to be collected; send prompt information, where the prompt information is used to prompt a driver to update the first planned path to the second planned path; and trigger the control information when the driver does not update the first planned path to the second planned path.

In a possible implementation, the specified area includes: an area determined based on a selection operation of the driver in a map or an area selection list, where the area selection list includes one or more areas; or an area determined based on the first planned path and a specified area selection rule.

For technical effects and specific descriptions of the control apparatus shown in FIG. 10 and the possible implementations of the control apparatus, refer to the foregoing control method. Details are not described herein again.

It should be understood that division of the modules in the foregoing apparatus is merely logical function division. During actual implementation, all or some of the modules may be integrated into one physical entity, or may be physically separated. In addition, the modules in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or implement functions of the modules in the apparatus. The processor is, for example, a general-purpose processor, for example, a central processing unit (central processing unit, CPU) or a microprocessor, and the memory is a memory in the apparatus or a memory outside the apparatus. Alternatively, the modules in the apparatus may be implemented in a form of hardware circuits, and functions of some or all modules may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing modules are implemented by designing a logical relationship between elements in the circuit. For another example, in another implementation, the hardware circuit may be implemented via a programmable logic device (programmable logic device, PLD). A field programmable gate array (field programmable gate array, FPGA) is used as an example, and the field programmable gate array may include a large quantity of logic gate circuits. A configuration file is used to configure a connection relationship between logic gate circuits, so as to implement functions of some or all of the foregoing modules. All the modules of the foregoing apparatuses may be implemented in a form of software invoked by the processor, or all the modules may be implemented in a form of the hardware circuit, or some modules may be implemented in a form of software invoked by the processor, and a remaining part may be implemented in a form of the hardware circuit.

In this embodiment of this application, the processor is a circuit having a signal processing capability. In an implementation, the processor may be a circuit having an instruction reading and running capability, for example, a CPU, a microprocessor, a graphics processing unit (graphics processing unit, GPU), a digital signal processor (digital signal processor, DSP), a neural-network processing unit (neural-network processing unit, NPU), or a tensor processing unit (tensor processing unit, TPU). In another implementation, the processor may implement a specific function by using the logical relationship of the hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing modules.

It can be learned that each module in the foregoing apparatus may be one or more processors (or processing circuits) configured to implement the method in the foregoing embodiments, for example, a CPU, a GPU, an NPU, a TPU, a microprocessor, a DSP, an ASIC, an FPGA, or a combination of at least two of these processor forms. In addition, all or some of the modules in the foregoing apparatuses may be integrated together, or may be implemented independently. This is not limited.

An embodiment of this application further provides an electronic device, including: a processor, and a memory configured to store instructions executable by the processor. When the processor is configured to execute the instructions, the method in the foregoing embodiments is implemented. For example, the steps of the control method shown in any one of FIG. 2, FIG. 4, FIG. 5, FIG. 6, FIG. 7, or FIG. 9 may be performed.

FIG. 11 is a diagram of a structure of an electronic device according to an embodiment of this application. As shown in FIG. 11, the electronic device may include at least one processor 1101, a communication line 1102, a memory 1103, and at least one communication interface 1104.

The processor 1101 may be a general-purpose central processing unit, a microprocessor, an application-specific integrated circuit, or one or more integrated circuits configured to control program execution of the solutions of this application. The processor 1101 may alternatively include a heterogeneous computing architecture of a plurality of general-purpose processors, for example, may be a combination of at least two of a CPU, a GPU, a microprocessor, a DSP, an ASIC, and an FPGA. In an example, the processor 1101 may be a CPU+GPU, a CPU+ASIC, or a CPU+FPGA.

The communication line 1102 may include a channel for transferring information between the foregoing components.

The communication interface 1104 is any apparatus such as a transceiver, and is configured to communicate with another device or communication network such as the Ethernet, a RAN, or a wireless local area network (wireless local area network, WLAN).

The memory 1103 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile optical disc, a Blu-ray optical disc, or the like), a magnetic disk storage medium or another magnetic storage device, or any other medium capable of carrying or storing expected program code in a form of instructions or data structures and capable of being accessed by a computer, but is not limited thereto. The memory may exist independently, and be connected to the processor by using the communication line 1102. The memory may alternatively be integrated with the processor. The memory provided in embodiments of this application may be usually non-volatile. The memory 1103 is configured to store computer-executable instructions for executing the solutions of this application, and the processor 1101 controls the execution. The processor 1101 is configured to execute the computer-executable instructions stored in the memory 1103, to implement the method provided in the foregoing embodiments of this application. For example, the processor 1101 may implement the steps of the control method shown in any one of FIG. 2, FIG. 4, FIG. 5, FIG. 6, FIG. 7, or FIG. 9.

Optionally, the computer-executable instructions in this embodiment of this application may also be referred to as application program code. This is not specifically limited in this embodiment of this application.

For example, the processor 1101 may include one or more CPUs, for example, a CPU 0 in FIG. 11. The processor 1101 may alternatively include a CPU and any one of a GPU, an ASIC, and an FPGA, for example, CPU 0+GPU 0, CPU 0+ASIC 0, or CPU 0+FPGA 0 in FIG. 11.

For example, the electronic device may include a plurality of processors, for example, the processor 1101 and a processor 1107 in FIG. 11. Each of the processors may be a single-core (single-CPU) processor, may be a multi-core (multi-CPU) processor, or may be a heterogeneous computing architecture including a plurality of general-purpose processors. The processor herein may be one or more devices, circuits, and/or processing cores configured to process data (for example, computer program instructions).

During specific implementation, in an embodiment, the electronic device may further include an output device 1105 and an input device 1106. The output device 1105 communicates with the processor 1101, and may display information in a plurality of manners. For example, the output device 1105 may be a liquid crystal display (liquid crystal display, LCD), a light emitting diode (light emitting diode, LED) display device, a cathode ray tube (cathode ray tube, CRT) display device, or a projector (projector). For example, the output device may be a display device, for example, a vehicle-mounted HUD, an AR-HUD, or a display. The input device 1106 communicates with the processor 1101, and may receive user input in a plurality of manners. For example, the input device 1106 may be a mouse, a keyboard, a touchscreen device, or a sensing device.

An embodiment of this application provides a computer program product. For example, the computer program product may include computer-readable code or a non-volatile computer-readable storage medium carrying computer-readable code. When the computer program product runs on a computer, the computer is enabled to perform the method in the foregoing embodiments. For example, the steps of the control method shown in any one of FIG. 2, FIG. 4, FIG. 5, FIG. 6, FIG. 7, or FIG. 9 may be performed.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. More specific examples (a non-exhaustive list) of the computer-readable storage media include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoded device such as a punched card or a groove protrusion structure storing instructions on the punched card or the groove protrusion structure, and any suitable combination of the foregoing. The computer-readable storage medium used herein is not to be construed as a transient signal, for example, a radio wave or another freely propagating electromagnetic wave, an electromagnetic wave propagating through a waveguide or another transmission medium (for example, a light pulse through an optical fiber cable), or an electrical signal transmitted through a wire.

The computer-readable program instructions described herein may be downloaded from the computer-readable storage medium to respective computing/processing devices or to an external computer or external storage device through a network, for example, the internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform operations in this application may be an assembly instruction, an instruction set architecture (ISA) instruction, a machine instruction, a machine-related instruction, microcode, a firmware instruction, status setting data, or source code or target code written in any combination of one or more programming languages. The programming languages include an object-oriented programming language such as Smalltalk and C++, and a conventional procedural programming language such as a "C" language or a similar programming language. The computer-readable program instructions may be executed entirely on a user computer, may be executed partially on a user computer as a standalone software package, may be executed partially on a user computer and partially on a remote computer, or may be executed entirely on a remote computer or a server. When a remote computer is involved, the remote computer may be connected to a user computer through any type of network, including a local area network (LAN) or a wide area network (WAN), or may be connected to an external computer (for example, through the internet provided by an internet service provider). In some embodiments, an electronic circuit, for example, a programmable logic circuit, a field programmable gate array (FPGA), or a programmable logic array (PLA), is customized by using status information of the computer-readable program instructions. The electronic circuit may execute the computer-readable program instructions, so as to implement the various aspects of this application.

The foregoing describes embodiments of this application. The foregoing descriptions are examples, are not exhaustive, and are not limited to the disclosed embodiments. Many modifications and changes are apparent to those of ordinary skill in the art without departing from the scope and spirit of the illustrated embodiments. Selection of terms used in this specification is intended to best explain the principles of embodiments, actual application, or improvements to technologies in the market, or to enable another person of ordinary skill in the art to understand embodiments disclosed in this specification.

## Claims

1. A control method, wherein the method is applied to a vehicle, and the method comprises:
obtaining control information, wherein the control information indicates to turn on or turn off all sensing devices in a first range of the vehicle; and
controlling, based on the control information, all the sensing devices in the first range to be turned on or turned off.

2. The method according to claim 1, wherein when the vehicle is in an autonomous driving mode,
the method further comprises: before controlling all the sensing devices in the first range to be turned off, controlling the vehicle to exit the autonomous driving mode.

3. The method according to claim 1 or 2, wherein the sensing device in the first range comprises at least one of a sensing device controlled by a cockpit domain controller CDC, a sensing device controlled by an intelligent driving domain controller ADC, and an in-vehicle wireless gateway.

4. The method according to claim 3, wherein when the sensing device in the first range is the sensing device controlled by the ADC, and all the sensing devices are turned off, the method further comprises:
controlling the ADC to enter a sleep state.

5. The method according to any one of claims 1 to 4, wherein the obtaining control information comprises:
obtaining the control information generated by the vehicle in response to a first operation of a driver.

6. The method according to any one of claims 1 to 4, wherein the control information comprises vehicle-to-everything V2X information; and
the obtaining control information comprises: receiving the V2X information from a roadside device, wherein the roadside device is located at an edge of a specified area, and the specified area is an area in which environment information is not allowed to be collected.

7. The method according to any one of claims 1 to 4, wherein the obtaining control information comprises:
obtaining a first planned path of the vehicle, and generating a second planned path when the first planned path passes through a specified area, wherein the second planned path does not pass through the specified area, and the specified area is an area in which environment information is not allowed to be collected;
sending prompt information, wherein the prompt information is used to prompt a driver to update the first planned path to the second planned path; and
triggering the control information when the driver does not update the first planned path to the second planned path.

8. The method according to claim 6 or 7, wherein the specified area comprises:
an area determined based on a selection operation of the driver in a map or an area selection list, wherein the area selection list comprises one or more areas; or
an area determined based on the first planned path and a specified area selection rule.

9. A control apparatus, wherein the apparatus is used in a vehicle, and the apparatus comprises:
an obtaining module, configured to obtain control information, wherein the control information indicates to turn on or turn off all sensing devices in a first range of the vehicle; and
a control module, configured to control, based on the control information, all the sensing devices in the first range to be turned on or turned off.

10. The apparatus according to claim 9, wherein when the vehicle is in an autonomous driving mode,
the control module is further configured to: before controlling all the sensing devices in the first range to be turned off, control the vehicle to exit the autonomous driving mode.

11. The apparatus according to claim 9 or 10, wherein the sensing device in the first range comprises at least one of a sensing device controlled by a cockpit domain controller CDC, a sensing device controlled by an intelligent driving domain controller ADC, and an in-vehicle wireless gateway.

12. The apparatus according to claim 11, wherein when the sensing device in the first range is the sensing device controlled by the ADC, and all the sensing devices are turned off,
the control module is further configured to control the ADC to enter a sleep state.

13. The apparatus according to any one of claims 9 to 12, wherein the obtaining module is specifically configured to obtain the control information generated by the vehicle in response to a first operation of a driver.

14. The apparatus according to any one of claims 9 to 12, wherein the control information comprises V2X information; and
the obtaining module is specifically configured to receive the V2X information from a roadside device, wherein the roadside device is located at an edge of a specified area, and the specified area is an area in which environment information is not allowed to be collected.

15. The apparatus according to any one of claims 9 to 12, wherein the obtaining module is specifically configured to:
obtain a first planned path of the vehicle, and generate a second planned path when the first planned path passes through a specified area, wherein the second planned path does not pass through the specified area, and the specified area is an area in which environment information is not allowed to be collected;
send prompt information, wherein the prompt information is used to prompt a driver to update the first planned path to the second planned path; and
trigger the control information when the driver does not update the first planned path to the second planned path.

16. The apparatus according to claim 14 or 15, wherein the specified area comprises: an area determined based on a selection operation of the driver in a map or an area selection list, wherein the area selection list comprises one or more areas; or
an area determined based on the first planned path and a specified area selection rule.

17. A vehicle, comprising:
a sensing device; and
a processing apparatus, configured to perform the method according to any one of claims 1 to 8, to control the sensing device to be turned on or turned off.

18. The vehicle according to claim 17, further comprising:
a control apparatus, configured to control all sensing devices connected to the control apparatus to be turned on or turned off.

19. The vehicle according to claim 18, wherein the control apparatus comprises a cockpit domain controller CDC and/or an intelligent driving domain controller ADC, wherein the CDC is configured to control all sensing devices connected to the CDC to be turned on or turned off, and the ADC is configured to control all sensing devices connected to the ADC to be turned on or turned off.

20. An electronic device, comprising:
a processor; and
a memory, configured to store instructions executable by the processor, wherein
the processor is configured to implement the method according to any one of claims 1 to 8 when executing the instructions.

21. A computer-readable storage medium, wherein the computer-readable storage medium stores computer program instructions, and when the computer program instructions are executed by a processor, the method according to any one of claims 1 to 8 is implemented.
